# EUROPÄISCHE PATENTSCHRIFT

(11) **EP 1 537 331 B1**
(45) Veröffentlichungstag und Bekanntmachung des Hinweises auf die Patenterteilung: **20.04.2011**
(21) Anmeldenummer: 03797168.6
(22) Anmeldetag: 13.08.2003
(51) Int. Cl.: F03D 11/02, F03D 9/00, H02K 7/18, H02K 7/116

(54) **WINDENERGIEANLAGE MIT KONZENTRISCHER GETRIEBE-/GENERATOR-ANORDNUNG**
WIND ENERGY INSTALLATION COMPRISING A CONCENTRIC GEARBOX/GENERATOR ARRANGEMENT
EOLIENNE COMPORTANT UN ENSEMBLE CONCENTRIQUE ENGRENAGE-GENERATEUR

(30) Priorität: 13.09.2002 DE 10242707
(43) Veröffentlichungstag der Anmeldung: 08.06.2005
(73) Patentinhaber: Aerodyn Engineering GmbH, 24768 Rendsburg (DE)
(72) Erfinder: SIEGFRIEDSEN, Sönke, 25878 Drage (DE)
(74) Vertreter: Biehl, Christian
(86) Internationale Anmeldenummer: PCT/DE2003/002722
(87) Internationale Veröffentlichungsnummer: WO 2004/027260

(56) Entgegenhaltungen:
- WO-A-02/33254
- WO-A-96/11338
- DD-A- 256 169
- US-A- 2 450 290
- US-A- 4 427 897
- RASMUSSEN P ET AL: "MULTIPOLE, PERMANENT MAGNET GENERATOR STUDIES AND PLANNED PROTOTYPES" EUROPEAN COMMUNITY WIND ENERGY CONFERENCE, XX, XX, 1993, Seiten 643-650, XP000606076

## Beschreibung

Die Erfindung betrifft eine Windenergieanlage mit konzentrischer Getriebe-/GeneratorAnordnung nach dem Oberbegriff des Hauptanspruches.

Für Windenergieanlagen sind eine Vielzahl von Triebstranganordnungen bekannt. Neben den getriebelosen Anlagen werden die meisten Anlagen aus einer Kombination von Getriebe und Generator aufgebaut. Getriebe und Generator werden bei Windenergieanlagen üblicherweise als einzelne Bauelemente hintereinander auf einem Maschinenträger angeordnet. Dies erlaubt im Schadensfall ein einfaches Austauschen dieses Komponenten, der gesamte Aufbau ist dabei aber lang und damit schwer und kostenintensiv.

In dem der EP 811 764 B1, werden Getriebe und Generator direkt hintereinander in ein gemeinsames Gehäuse eingebaut, wobei das Getriebe ein einstufiges Planetengetriebe ist, und das Gehäuse direkt auf dem Turm plaziert ist. Das Getriebe und der Generator haben dabei ungefähr den gleichen Außendurchmesser, beide Komponenten sind direkt hintereinander angeordnet. Dieser Aufbau ermöglicht eine kompakte und leichte Bauweise. Al- - lerdings liegt hierin auch der Nachteil, dass die einzelnen Komponenten auf dem Turmkopf nicht mehr getauscht werden können.

Bei Schäden an diesen Komponenten muss die Anlage insgesamt vom Turmkopf heruntergehoben werden. Weiter erfordert der Einbau in ein gemeinsames Gehäuse einen annähernd gleichen Außendurchmesser der beiden Komponenten, was wiederum zu keiner optimalen Auslegung des Generators führt.

Siehe auch WO-A-96/11338.

In der WO 01/94779 A1 wird eine Anordnung gezeigt, die einen direktbetriebenen Generator auf der dem Rotor gegenüberliegenden Seite hat. Dieses Konzept ist aufgrund des großen Generators wirtschaftlich äußerst ungünstig, weil es massen- und kostenmäßig nicht konkurrenzfähig ist.

Die DK 173 530 B1 zeigt einen sehr langgestreckten Triebstrangaufbau, bei dem Getriebe und Generator mit Zwischenwelle hintereinander angeordnet sind. Dieser Aufbau ermöglicht zwar den Austausch der Komponenten, ist aber sehr schwer und kostenintensiv in der Ausführung.

Der Erfindung liegt die Aufgabe zugrunde, eine Windenergieanlage zu schaffen, die ein einfaches Auswechseln von Getriebe und Generator erlaubt und dabei kompakt und leicht in der Ausführung ist. Die Unteransprüche geben vorteilhafte Ausführungsbeispiele an.

Erfindungsgemäß wird die Aufgabe durch die kennzeichnenden Merkmale des Anspruchs 1 gelöst.

Der Maschinenträger sollte an seiner einen Stirnseite ein vorderes Rotorlager und an seiner gegenüberliegenden Stirnseite ein hinteres Rotorlager aufweisen, so dass keinerlei Lasten des Rotors in die Getriebe/Generatoranordnung übertragen werden.

Das vordere Rotorlager kann aber auch als direkt an der Nabe angeordnetes Momentenlager ausgebildet sein, das an der Stirnseite des Maschinenträgers befestigt ist. Über eine gelenkige Zwischenwelle werden ebenfalls keine äußeren Lasten auf die Getriebe/Generatoranordnung übertragen.

Das Getriebe und der Generator sind vorzugsweise einzeln lösbar mit dem Maschinenträger verbunden, damit sie jeweils einzeln axial demontiert und ausgetauscht werden können.

Das Getriebe kann ein einstufiges Planetengetriebe aber auch ein Stufenplanetengetriebe sein. Die Übersetzung dieses Getriebes kann zwischen 1:6 bis 1:11 betragen, wodurch ein mittelschnelldrehbarer Generator erforderlich ist. Bei einer Rotordrehzahl von z. B. 15 min⁻¹ ist damit die Generatordrehzahl bei 90 -165 min⁻¹.

Die Getriebe-/Generatoranordnung ist vorzugsweise mit Kühlrippen versehen, über die Verlustwärme der Einheiten an die Außenatmosphäre abgeführt wird.

Weiter kann eine auf dem Maschinenträger angeordnete, zum Absetzen der Getriebe/Generatoranordnung dienende Hebevorrichtung vorgesehen sein.

Für die Kosten und das Gewicht eines mittelschnelldrehbaren Generators, vor allem bei einer Ausbildung als permanenterregte Maschine, ist es vorteilhaft, dass er als Ringgenerator mit großem Durchmesser und kurzer Blechpaketlänge kurz ausgebildet ist. Damit ergibt sich für den Generator ein freier Innendurchmesser der ausreicht, um ein Getriebe innen einzubauen. Wenn es sich bei dem Getriebe um ein einstufiges Planetengetriebe oder Stufenplanetengetriebe handelt, sind die technisch und wirtschaftlich besten Abmessungen so, dass der Getriebeaußendurchmesser eine ähnliche Größe aufweist, wie der Innendurchmesser des Generators. Damit kann das Getriebe und der optimal ausgelegte Ringgenerator konzentrisch zueinander angeordnet werden. Durch diese Anordnung kann gewährleistet werden, dass nur langsamlaufende Teile in der Anlage vorhanden sind, die naturgemäß einen geringen Verschleiß und eine geringe Ausfallwahrscheinlichkeit aufweisen.

Die Lasten des Rotors werden über die Lagerung im Maschinenträger direkt in den Turm übertragen, ohne das Getriebe und den Generator zu belasten. Dabei sind das konzentrisch angeordnete Getriebe und der Generator, auf der dem Rotor bezüglich der Turmachse gegenüber liegenden Seite angeordnet. Dadurch schafft diese Einheit einen Gegengewichtsausgleich zum Rotor bezüglich der Vertikallagerung. Ferner ist es so möglich, Getriebe und Generator axial zu demontieren und auszuwechseln.

Die axiale Demontierbarkeit in Verbindung mit der trotzdem sehr kompakten und damit leichten Triebstranganordnung stellt einen entscheidenden Vorteil vor allem für Großanlagen dar. Dabei ist es möglich, die einzelnen Komponenten separat zu tauschen, ohne dass der Rotor demontiert werden muss. Das Getriebe sowie der Läufer und der Stator des Generators können einzeln nach Entfernen des Verschlussdeckels ausgebaut und ersetzt werden.

Die Anordnung des Stators des Generators als äußerstes Bauteil ermöglicht es, den größten Teil der Generatorverlustwärme über eine Verrippung an die Außenatmosphäre abzuführen. Der Innenraum des gemeinsamen Gehäuses und das Getriebe können über die weiteren, ggf. verrippten Gehäuseteile ihre Verlustwärme nach außen abführen. Das Antriebsrad des Generatorläufers kann dafür mit Ventilatorelementen bestückt sein, um die erforderliche Luftzirkulation intern im Gehäuse sicherzustellen. Dadurch kann eine komplett gegen Umwelteinflüsse gekapselte Getriebe/Generatoreinheit geschaffen werden, die die Verlustwärme über Außenwandungen abführen kann.

Die Erfindung wird im folgenden anhand einer Zeichnung erläutert. Dabei zeigt:
- Fig. 1: ein erstes Ausführungsbeispiel der erfinderischen An- ordnung in einer Schnittdarstellung und
- Fig. 2: ein zweites Ausführungsbeispiel der erfinderischen Anordnung in einer Schnittdarstellung.

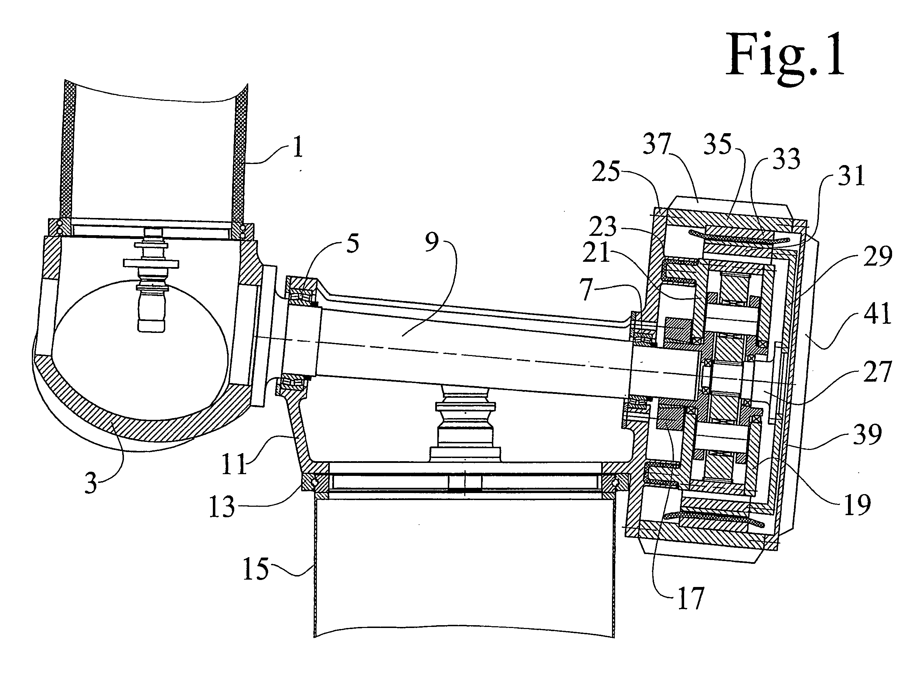

Die in Fig. 1 nur zum Teil dargestellten Rotorblätter 1 der Windenergieanlage treiben eine Nabe 3 an, die auch alle weiteren Kräfte und Momente, die vom Rotor erzeugt werden, aufnimmt. Über ein vorderes Rotorlager 5 und ein hinteres Rotorlager 7 wird eine Rotorwelle 9 gelagert und die Rotorlasten auf einen Maschinenträger 11 übertragen.

Ein Vertikallager 13 überträgt die Lasten dann in den Turm 15 der Windenergieanlage. Die äußeren aerodynamischen Lasten und Massenbelastungen des Rotors werden damit in den Turm eingeleitet, ohne ganz oder teilweise über das Getriebe oder den Generator geleitet worden zu sein. Über ein Verbindungselement 17, z. B. eine Schrumpfscheibe, ist das Getriebe 19 drehmomentenfest mit der Rotorwelle 9 verbunden.

Ein Getriebegehäuse 21 stützt sich über die elastischen Elemente 23 zu einer Grundplatte 25 ab. Diese elastischen Elemente 23 sorgen dafür, dass Drehmomentenstöße abgefangen werden und Verformungen der Struktur aufgrund von äußeren Lasten nicht zu Belastungen der Verzahnung oder Lagerung im Getriebe führen.

Über die Abtriebswelle 27 des Getriebes wird das Verbindungsrad 29 angetrieben, das wiederum mit dem Läufer 31 des Generators verbunden ist. Dieser Läufer 31 ist zu dem Getriebe 19 konzentrisch und dieses umfassend angeordnet und hat einen größeren Durchmesser als das Getriebegehäuse 21. Das Verbindungsrad 29 ist dabei lösbar mit dem Generatorläufer 31 verbunden, um das Getriebe 19 ohne Demontage des Generatorläufers 31 ausbauen zu können.

Der Stator 33 des Generators ist über das Gehäuse 35 mit der Grundplatte 25 am Maschinenträger 11 befestigt. Durch die Verrippung 37 des Gehäuses 35 nach außen kann erreicht werden, dass die Verlustwärme der Ständerwicklung an die Außenatmosphäre abgeführt wird. Der Verschlussdeckel 39 dichtet den gesamten Triebstrang ab und kann durch eine äußere Verrippung 41 dazu beitragen, die Verlustwärme des Triebsstrangs an die Atmosphäre abzuführen.

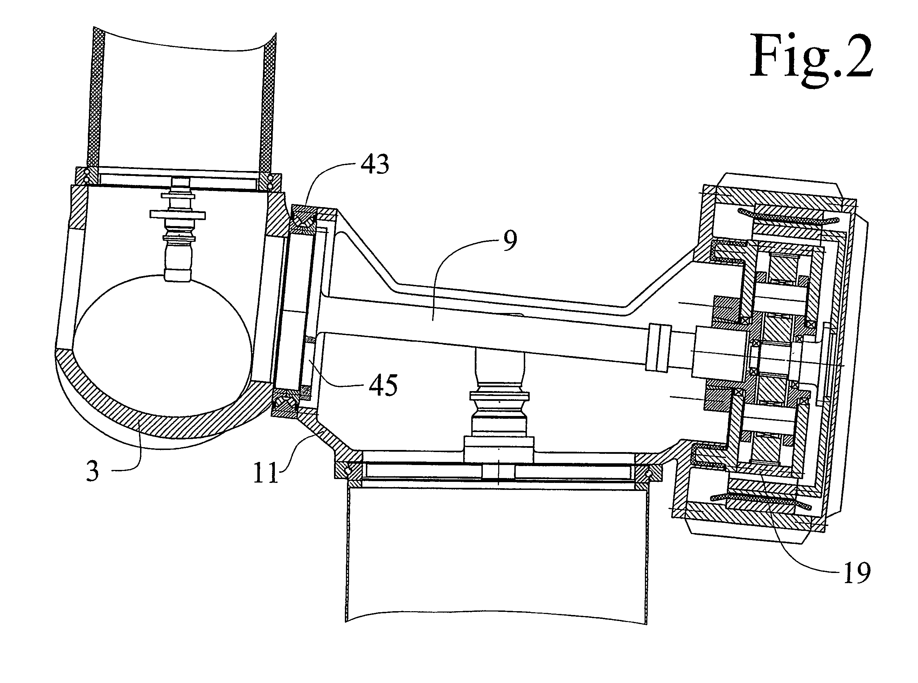

Fig. 2 zeigt eine Variante der Erfindung. Dabei werden die Rotorlasten über das Momentlager 43 auf den Maschinenträger 11 übertragen. Ein Momentenlager 43 übernimmt alle äußeren Lasten und überträgt nur das Drehmoment über die Welle 9 an das Getriebe 19. Die Welle 9 kann dadurch sehr leicht ausgeführt werden. Ferner ermöglicht diese Ausführung den Durchstieg von Wartungspersonal von dem Maschinenträger 11 durch ein Mannloch 45 in der Welle 9 in die Nabe 3. Ansonsten ist die Getriebe/Generatoranordnung identisch mit der Ausführung der Fig. 1.

## Patentansprüche

1. Windenergieanlage mit einem Rotor (1, 3), einer Rotorwelle (9), einem Getriebe (19) und einem Generator (31,33), **dadurch gekennzeichnet, dass**
- der Generator (31, 33) als ein das Getriebe (19) konzentrisch umfassender Ring ausgebildet ist,
- die Getriebe-/Generatoranordnung auf der dem Rotor (1, 3) gegenüberliegenden Seite des Turms angeordnet ist, und
- das Getriebe (19) und der Generator (31, 33) axial demontierbar sind und jeweils separat mit dem Maschinenträger (11) abnehmbar verbunden sind.

2. Windenergieanlage nach Anspruch 1, **gekennzeichnet durch** einen Maschinenträger (11), der an seiner einen Stirnseite ein vorderes Rotorlager (5, 43) und an seiner gegenüberliegenden Stirnseite ein hinteres Rotorlager (7) aufweist.

3. Windenergieanlage nach einem der vorangehenden Ansprüche, **dadurch gekennzeichnet, dass** das vordere Rotorlager (43) als direkt an der Nabe angeordnetes Momentenlager ausgebildet ist.

4. Windenergieanlage nach einem der vorangehenden Ansprüche, **dadurch gekennzeichnet, daß** das Getriebe (19) und der Generator (31, 33) einzeln lösbar mit dem Maschinenträger (11) verbunden sind.

5. Windenergieanlage nach einem der vorangehenden Ansprüche, **dadurch gekennzeichnet, daß** das Getriebe (19) und der Generator (31, 33) einzeln axial demontierbar austauschbar mit dem Maschinenträger (11) verbunden sind.

6. Windenergieanlage nach einem der vorangehenden Ansprüche, **dadurch gekennzeichnet, dass** das Getriebe (19) über elastische Elemente (23) mit dem Maschinenträger (11) verbunden ist.

7. Windenergieanlage nach einem der vorangehenden Ansprüche, **dadurch gekennzeichnet, dass** das Getriebe (31, 33) ein einstufiges Planetengetriebe ist.

8. Windenergieanlage nach einem der Ansprüche 1 bis 6, **dadurch gekennzeichnet, dass** das Getriebe ein Stufenplanetengetriebe ist.

9. Windenergieanlage nach einem der vorangehenden Ansprüche, **dadurch gekennzeichnet, dass** der Generator ein permanenterregter Ringgenerator ist.

10. Windenergieanlage nach einem der vorangehenden Ansprüche, **dadurch gekennzeichnet, dass** die Getriebe/Generatoranordnung mit Kühlrippen (37, 41) versehen ist.

## Claims

1. A wind power plant having a rotor (1, 3), a rotor shaft (9), a transmission (19) and a generator (31, 33), **characterized in that**
- the generator (31, 33) is designed as a ring that encompasses the transmission (19) concentrically,
- the transmission/generator arrangement is arranged on the side of the tower opposite the rotor (1, 3) and
- the transmission (19) and the generator (31, 33) can be dismantled axially and are in each case connected separately to the machine carrier (11) such that they can be removed.

2. The wind power plant according to Claim 1, **characterized by** a machine carrier (11) that has a front rotor bearing (5, 43) at its front face and a rear rotor bearing (7) at its opposite front face.

3. The wind power plant according to one of the preceding claims, **characterized in that** the front rotor bearing (43) is designed as a moment bearing arranged directly at the hub.

4. The wind power plant according to one of the preceding claims, **characterized in that** the transmission (19) and the generator (31, 33) are connected to the machine carrier (11) such that they can be disconnected individually.

5. The wind power plant according to one of the preceding claims, **characterized in that** the transmission (19) and the generator (31, 33) are connected to the machine carrier such that they can be exchanged and dismantled individually and axially.

6. The wind power plant according to one of the preceding claims, **characterized in that** the transmission (19) is connected to the machine carrier (11) by means of elastic elements (23).

7. The wind power plant according to one of the preceding claims, **characterized in that** the transmission (19) is a single-stage planetary transmission.

8. The wind power plant according to one of claims 1 to 6, **characterized in that** the transmission is a staged planetary transmission.

9. The wind power plant according to one of the preceding claims, **characterized in that** generator is a permanently excited ring generator.

10. The wind power plant according to one of the preceding claims, **characterized in that** transmission/generator arrangement is provided with cooling ribs (37, 41).

## Revendications

1. Centrale à énergie éolienne avec un rotor (1, 3), un arbre rotor (9), un engrenage (19) et une génératrice (31, 33), **caractérisée par le fait que**
- la génératrice (31, 33) est réalisée en forme d'anneau qui ceinture l'engrenage (19) de manière concentrique,
- l'ensemble de l'engrenage/génératrice est disposé sur le côté de la tour opposé au rotor (1, 3), et que
- l'engrenage (19) et la génératrice (31, 33) sont axialement démontables et qu'ils sont fixés individuellement et de manière démontable avec le châssis.

2. Centrale à énergie éolienne selon revendication 1, **caractérisée par** un châssis (11) qui présente, sur un front un palier de rotor avant (5, 43) et sur le front opposé un palier de rotor arrière (7).

3. Centrale à énergie éolienne selon une des revendications ci-dessus, **caractérisée par le fait que** le palier de rotor avant est un palier à couple, disposé directement sur le moyeu.

4. Centrale à énergie éolienne selon une des revendications ci-dessus, **caractérisée par le fait que** le palier de rotor avant est un palier à couple, disposé directement sur le moyeu.

5. Centrale à énergie éolienne selon une des revendications ci-dessus, **caractérisée par le fait que** l'engrenage (19) et la génératrice (31, 33) sont fixés sur le châssis (11) de manière individuellement axialement démontables et remplaçables.

6. Centrale à énergie éolienne selon une des revendications ci-dessus, **caractérisée par le fait que** l'engrenage (19) est lié au châssis (11) par des éléments élastiques (23).

7. Procédé selon une des revendications ci-dessus, **caractérisée par le fait que** l'engrenage (19) est un engrenage planétaire à un-étage.

8. Centrale à énergie éolienne selon une des revendications ci-dessus, **caractérisée par le fait que** l'engrenage est un engrenage planétaire à plusieurs étages.

9. Centrale à énergie éolienne selon une des revendications ci-dessus, **caractérisée par le fait que** la génératrice est une génératrice annulaire à aimants permanents.

10. Centrale à énergie éolienne selon une des revendications ci-dessus, **caractérisée par le fait que** l'ensemble engrenage/génératrice est pourvue d'ailettes de refroidissement (37, 41).
